# FASCICULE DE BREVET EUROPEEN

(11) **EP 2 891 844 B1**
(45) Date de publication et mention de la délivrance du brevet: **08.03.2017**
(21) Numéro de dépôt: 14188516.0
(22) Date de dépôt: 10.10.2014
(51) Int. Cl.: F24D 17/00, F24D 17/02

(54) **Système de production d'eau chaude sanitaire couplé à des panneaux photovoltaïques et procédé d'amélioration du rendement d'un tel système de production d'eau chaude sanitaire**
System zur Warmwassererzeugung im Sanitärbereich gekoppelt an Fotovoltaikmodule, und Verfahren zur Verbesserung der Leistung eines solchen Systems zur Warmwassererzeugung im Sanitärbereich
System for producing domestic hot water coupled with photovoltaic panels and method for improving the efficiency of such a system for producing domestic hot water

(30) Priorité: 31.10.2013 FR 1360740
(43) Date de publication de la demande: 08.07.2015
(73) Titulaire: Atlantic Industrie, 85000 La Roche sur Yon (FR)
(72) Inventeur: Fleury, Bernard, 85000 La Roche-sur-Yon (FR); Gatel, Guillaume, 35770 Vern Sur Seiche (FR)
(74) Mandataire: Cabinet Chaillot

(56) Documents cités:
- EP-A1- 2 592 358
- DE-A1- 3 020 369
- DE-A1- 10 144 148
- DE-A1- 19 902 650

## Description

La présente invention concerne le domaine de la production d'énergie, et porte en particulier sur un système de production d'eau chaude sanitaire utilisant une pompe à chaleur aérothermique et sur un procédé d'amélioration du rendement d'un tel système de production d'eau chaude sanitaire.

Du fait de l'augmentation du coût de l'énergie, de nouveaux systèmes de production d'énergie sont apparus, en particulier pour la production d'eau chaude sanitaire.

On connaît notamment les systèmes à pompe à chaleur aérothermique, et plus particulièrement le chauffe-eau thermodynamique aérothermique, qui comprend une pompe à chaleur qui utilise les calories présentes dans l'air pour chauffer de l'eau chaude sanitaire contenue dans un ballon.

Ce système présente l'avantage d'utiliser la chaleur d'une énergie renouvelable, un flux d'air, pour chauffer l'eau chaude sanitaire dans le ballon.

Il existe plusieurs types de chauffe-eau thermodynamique aérothermique : sur air extérieur, qui aspirent l'air extérieur et le refoulent à l'extérieur par l'intermédiaire d'une gaine ; sur air intérieur, qui aspirent l'air dans le local où se situe le chauffe-eau thermodynamique et le refoulent dans le même local ou à l'extérieur par l'intermédiaire d'une gaine ; et sur air extrait, qui extraient l'air vicié dans un bâtiment et l'utilisent pour chauffer l'eau chaude sanitaire avant de le refouler vers l'extérieur.

La demande de brevet européen EP2592358 décrit une installation de régulation de température et de production d'eau chaude selon l'état antérieur de la technique.

La présente invention vise à proposer un système qui utilise la chaleur produite en fonctionnement à l'arrière d'un ensemble de panneaux photovoltaïques pour améliorer le rendement d'un système de production d'eau chaude sanitaire utilisant un dispositif à pompe à chaleur aérothermique sur air extrait.

La présente invention utilise les calories extraites de la ventilation arrière de panneaux photovoltaïques comme source d'énergie complémentaire pour un dispositif à pompe à chaleur aérothermique sur air extrait.

La ventilation arrière des panneaux photovoltaïques permet une amélioration significative de leur rendement de production d'énergie. Elle nécessite la mise en mouvement et la canalisation de l'air au dos des panneaux photovoltaïques. Différents dispositifs connus existent sur le marché, mais l'air surchauffé provenant de l'arrière des panneaux photovoltaïques est ensuite soit évacué vers l'extérieur soit utilisé pour le chauffage aéraulique. Ces dispositifs connus exigent en outre l'adjonction d'un ventilateur qui induit des consommations parasites.

La présente invention vise à utiliser un système de production d'eau chaude sanitaire couplé à des panneaux photovoltaïques, l'air chaud produit à l'arrière des panneaux photovoltaïques étant ventilé pour augmenter leur rendement et l'air chaud ventilé étant fourni au système de production d'eau chaude sanitaire pour augmenter son rendement.

La présente invention a donc pour objet un système de production d'eau chaude sanitaire pour un bâtiment, caractérisé par le fait qu'il comprend :
un dispositif à pompe à chaleur aérothermique produisant de l'eau chaude sanitaire à partir d'un flux d'air et d'une alimentation en eau froide ;
une ventilation mécanique contrôlée (VMC), comprenant un réseau de conduites d'air dans le bâtiment et un système de ventilation pour faire circuler de l'air dans le réseau de conduites d'air dans le bâtiment et entre l'intérieur et l'extérieur du bâtiment, le réseau de conduites d'air étant couplé au dispositif à pompe à chaleur aérothermique, le dispositif à pompe à chaleur aérothermique utilisant l'air mis en circulation par la ventilation mécanique contrôlée pour produire de l'eau chaude sanitaire ;
un ensemble panneaux photovoltaïques, sur ou à proximité du bâtiment, collectant la lumière émise par le soleil ;
au moins une conduite d'air du réseau de conduites d'air de la ventilation mécanique contrôlée débouchant sur l'arrière de l'ensemble panneaux photovoltaïques et étant reliée au dispositif à pompe à chaleur aérothermique pour, par l'intermédiaire du système de ventilation, utiliser l'air chauffé par le soleil à l'arrière de l'ensemble panneaux photovoltaïques pour produire de l'eau chaude sanitaire.

Ainsi, l'air chauffé produit à l'arrière de l'ensemble panneaux photovoltaïque est utilisé pour produire de l'eau chaude sanitaire dans le dispositif à pompe à chaleur aérothermique avec de l'air plus chaud que l'air provenant des pièces du bâtiment, permettant donc d'améliorer le rendement du dispositif à pompe à chaleur aérothermique.

La ventilation mécanique contrôlée comprend en particulier des entrées d'air sur la façade du bâtiment, lesdites entrées d'air étant soit autoréglables, dont le débit d'air de ventilation est constant dans une plage de différences de pression de part et d'autre définie, soit hygroréglables, dont le débit d'air de ventilation est fonction de l'humidité intérieure, soit asservies à toute autre variable caractéristique de la pollution intérieure du bâtiment, et des bouches d'extraction d'air, lesdites bouches d'extraction d'air étant soit autoréglables, soit hygroréglables, soit asservies à toute autre variable caractéristique de la pollution intérieure du bâtiment.

Selon un mode de réalisation, le réseau de conduites d'air de la ventilation mécanique contrôlée relie en outre une ou plusieurs des pièces du bâtiment et le dispositif à pompe à chaleur aérothermique pour utiliser l'air provenant de la ou des pièces du bâtiment pour produire de l'eau chaude sanitaire.

Ainsi, le dispositif à pompe à chaleur aérothermique peut fonctionner avec l'air chauffé provenant de la ventilation mécanique contrôlée, même lorsque l'air à l'arrière de l'ensemble panneaux photovoltaïques n'est pas suffisamment chaud pour être utilisé avec le dispositif à pompe à chaleur aérothermique.

Selon un mode de réalisation, la au moins une conduite d'air entre l'arrière de l'ensemble panneaux photovoltaïques et le dispositif à pompe à chaleur aérothermique est munie d'un clapet dont l'ouverture et la fermeture sont commandées par un dispositif de commande.

On peut ainsi couper la circulation d'air entre l'arrière de l'ensemble panneaux photovoltaïques et le dispositif à pompe à chaleur aérothermique lorsque l'air provenant de l'ensemble panneaux photovoltaïques n'est pas assez chaud.

Selon un mode de réalisation, le dispositif de commande commande l'ouverture et la fermeture du clapet soit en fonction d'horaires et/ou de jours préprogrammés, soit en fonction d'une température moyenne d'air optimisée entrant dans la pompe à chaleur, ladite température moyenne d'air optimisée étant définie par le point optimal de fonctionnement de la matrice de performance de ladite pompe à chaleur.

Ainsi l'utilisateur pourra programmer l'ouverture du clapet en fonction des heures et des jours d'ensoleillement connus et/ou prévus.

En dehors des périodes d'ensoleillement, l'air à l'arrière de l'ensemble panneaux photovoltaïques n'est pas assez chaud et ne sera donc ainsi pas utilisé avec le dispositif à pompe à chaleur aérothermique, le clapet restant alors fermé et le dispositif à pompe à chaleur aérothermique utilisant alors pour fonctionner l'air fourni par la ventilation mécanique contrôlée.

Selon un mode de réalisation, le système de l'invention comprend en outre une sonde de température à l'arrière de l'ensemble panneaux photovoltaïques, le dispositif de commande commandant l'ouverture et la fermeture du clapet en fonction de la température mesurée par la sonde.

On peut ainsi, par exemple, commander l'ouverture du clapet lorsque la température est supérieure à 10°C, de préférence supérieure à 20°C, de la façon que l'on préfère le plus supérieure à 25°C. On s'assure ainsi que l'air provenant de l'arrière de l'ensemble panneaux photovoltaïques est suffisamment chaud pour être utilisé avec le dispositif à pompe à chaleur aérothermique pour augmenter son rendement.

Selon un mode de réalisation, le dispositif de commande commande l'ouverture et la fermeture du clapet pour contrôler la température de l'air admis dans le dispositif à pompe à chaleur aérothermique.

On peut ainsi facilement commander la température de l'air admis dans le dispositif à pompe à chaleur aérothermique.

Le dispositif de commande peut être indépendant (programmateur) ou faire partie de la ventilation mécanique contrôlée ou du dispositif à pompe à chaleur aérothermique.

Selon un mode de réalisation, le dispositif à pompe à chaleur aérothermique est un chauffe-eau thermodynamique aérothermique, l'énergie produite par le chauffe-eau thermodynamique aérothermique étant utilisée pour produire de l'eau chaude sanitaire.

En particulier, le chauffe-eau thermodynamique aérothermique est un chauffe-eau thermodynamique sur air extrait.

Les chauffe-eaux thermodynamiques assurant ainsi la ventilation mécanique contrôlée doivent se satisfaire des débits réglementaires de la ventilation mécanique contrôlée qui peuvent être très faibles, surtout quand ces débits sont conditionnés par l'humidité de la pièce (bouches hygroréglables), et en conséquence les calories présentes dans cet air sont réduites et la capacité de production d'eau chaude sanitaire est réduite en volume et en réactivité. Le couplage avec les panneaux photovoltaïques et l'air provenant de l'arrière de ceux-ci permet d'une part d'aérer les panneaux photovoltaïques et d'améliorer leur rendement, et d'autre part d'avoir un flux d'air plus important et plus chaud apporté par la ventilation mécanique contrôlée au chauffe-eau thermodynamique aérothermique.

Selon un mode de réalisation, le système de ventilation de la ventilation mécanique contrôlée est le ventilateur du chauffe-eau thermodynamique aérothermique.

On dispose ainsi d'un unique ventilateur pour l'ensemble du système de production d'eau chaude sanitaire, ce qui permet de diminuer l'encombrement et les coûts (pas besoin de ventilateur supplémentaire pour ventiler l'arrière des panneaux photovoltaïques puisque l'on utilise celui du chauffe-eau thermodynamique aérothermique) et élimine les consommations parasites lors d'un ajout de ventilateur auxiliaire. Le ventilateur du chauffe-eau thermodynamique est ainsi utilisé pour ventiler l'arrière des panneaux photovoltaïques pour augmenter leur rendement.

Le ventilateur du chauffe-eau thermodynamique aérothermique assure en conséquence l'extraction de l'air de la ventilation mécanique contrôlée, la ventilation de l'évaporateur de la pompe à chaleur du chauffe-eau thermodynamique aérothermique et le refroidissement des panneaux photovoltaïques.

Le débit de ventilation du ventilateur sera notamment, comme indiqué ci-dessus, conditionné soit par la température d'air à l'arrière des panneaux photovoltaïques, soit par une horloge qui délimite le temps où les panneaux photovoltaïques sont en production (période diurne), soit en fonction d'une température moyenne d'air optimisée entrant dans la pompe à chaleur, ladite température moyenne d'air optimisée étant définie par le point optimal de fonctionnement de la matrice de performance de ladite pompe à chaleur. Le point optimal de fonctionnement de la matrice de performance est défini par les deux paramètres débit de ventilation du ventilateur et température moyenne d'air offrant le meilleur rendement de ladite pompe à chaleur aérothermique et la consommation minimale du ventilateur. Dans ce dernier cas, il faudra donc bien évidemment prévoir une sonde de température à l'entrée de la pompe à chaleur. En l'absence de besoins de refroidissement des panneaux photovoltaïques, le clapet sera fermé pour isoler cette zone et limiter les pertes de charge. Le débit extrait par le ventilateur est alors réduit pour rendre sa consommation minimale. La fermeture du clapet permet également d'éviter une réduction de la température de l'air admis dans la pompe à chaleur.

Selon un mode de réalisation, la puissance du ventilateur peut être maintenue constante en fonctionnement par utilisation du foisonnement, c'est-à-dire quand les débits de la ventilation mécanique contrôlée sont tous simultanément au maximum, ce qui permet de réduire mécaniquement de manière temporaire le débit de ventilation des panneaux photovoltaïques.

Le chauffe-eau thermodynamique aérothermique fonctionnera prioritairement en production d'eau chaude sanitaire le jour pendant la période où les panneaux produisent de l'électricité pour une auto-consommation par le chauffe-eau thermodynamique aérothermique pour produire de l'eau chaude sanitaire et où il se produit un échauffement au dos des panneaux photovoltaïques.

Cela permet une auto consommation de l'énergie produite par les panneaux photovoltaïques sans déperditions dues au transport de cette énergie, grâce à la simultanéité de la production électrique des panneaux photovoltaïques et du fonctionnement du chauffe-eau thermodynamique aérothermique.

Ainsi, grâce à l'auto-consommation, les pertes sur le réseau d'électricité sont évitées et le débit d'air et la température de cet air arrivant au chauffe-eau thermodynamique aérothermique sont améliorés de manière significative et par conséquent le coefficient de performance (COP) du chauffe-eau thermodynamique aérothermique est amélioré.

Il est également possible d'augmenter le débit d'air circulant dans le chauffe-eau thermodynamique aérothermique par l'activation du clapet en dehors des périodes de production des panneaux photovoltaïques, lors de fonctionnement occasionnel du chauffe-eau thermodynamique aérothermique pour lui permettre de reconstituer sa réserve d'eau chaude sanitaire.

L'invention a également pour objet un procédé d'amélioration du rendement d'un système de production d'eau chaude sanitaire tel que décrit ci-dessus, caractérisé par le fait qu'il comprend l'opération consistant à ouvrir le clapet lorsque la température est supérieure ou égale à une température seuil.

Selon un mode de réalisation, la température seuil est, par exemple, de 25°C, de préférence une valeur définie par l'optimisation du coefficient de performance du dispositif à pompe à chaleur aérothermique issu de la matrice de performance du dispositif à pompe à chaleur aérothermique.

L'invention a également pour objet un procédé d'amélioration du rendement d'un système de production d'eau chaude sanitaire à chauffe-eau thermodynamique aérothermique, caractérisé par le fait qu'il consiste à faire fonctionner le chauffe-eau thermodynamique aérothermique pour produire de l'eau chaude sanitaire lorsque l'ensemble panneaux photovoltaïques produit de l'électricité.

L'invention a également pour objet un procédé d'amélioration du rendement d'un système de production d'eau chaude sanitaire à chauffe-eau thermodynamique aérothermique, caractérisé par le fait qu'il comprend la modulation de l'ouverture et de la fermeture du clapet commandable pour contrôler la température de l'air admis dans le chauffe-eau thermodynamique.

L'invention a également pour objet un bâtiment comprenant un système de production d'eau chaude sanitaire tel que décrit c-dessus.

Pour mieux illustrer l'objet de la présente invention, on va en décrire ci-après à titre illustratif et non limitatif un mode de réalisation particulier, en liaison avec le dessin annexé.

Sur ce dessin :

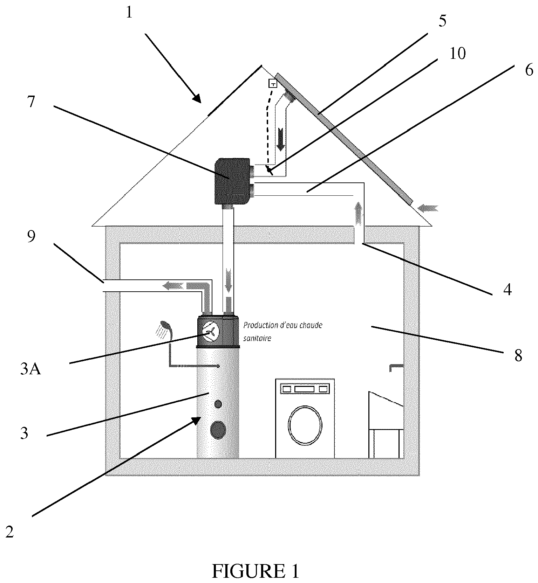

- la Figure 1 est une vue schématique d'un système de production d'eau chaude sanitaire selon la présente invention.

Bien que la Figure 1 illustre le principe de la présente invention avec un chauffe-eau thermodynamique aérothermique produisant de l'énergie sous forme d'eau chaude sanitaire, l'enseignement de la présente invention est transposable à tout système de production d'énergie utilisant une pompe à chaleur aérothermique, et la présente invention n'est donc pas limitée au chauffe-eau thermodynamique aérothermique. Des exemples d'autres systèmes de production d'énergie qui peuvent utiliser les principes de la présente invention sont par exemple les pompes à chaleur pour le chauffage domestique, ou les chauffe-eaux thermodynamiques autres que ceux assurant la fonction de ventilation mécanique contrôlée.

Si l'on se réfère à la Figure 1, on peut voir que l'on y a représenté un bâtiment 1 équipé d'un système de production d'eau chaude sanitaire 2 selon la présente invention produisant in fine de l'eau chaude sanitaire.

Le système de production d'eau chaude sanitaire 2 comprend un chauffe-eau thermodynamique aérothermique 3, une ventilation mécanique contrôlée 4, un ensemble panneaux photovoltaïques 5 situé sur le toit du bâtiment 1 mais pouvant également être à proximité du bâtiment 1, et un ensemble de conduites d'air 6.

Un exemple d'un chauffe-eau thermodynamique aérothermique qui peut être utilisé dans le cadre de la présente invention est par exemple le chauffe-eau thermodynamique sur air extrait.

Sur la Figure 1, les zones humides à ventiler par ventilation mécanique contrôlée sont réduites à une zone 8 pour plus de simplicité, mais l'invention est applicable à tout nombre de zones humides à ventiler dans un bâtiment, et l'invention n'est pas limitée à cet égard, l'augmentation du nombre de zones humides à ventiler ayant pour unique conséquence l'augmentation du nombre de conduites d'air 6, mais pas une modification de la structure du système 1 selon l'invention.

Comme on peut le voir sur la Figure 1, un point collecteur 7 des conduites d'air 6 permet de diriger l'air provenant de la zone humide à ventiler 8 et de l'arrière de l'ensemble panneaux photovoltaïques 5 vers le chauffe-eau thermodynamique aérothermique 3, où cet air est consommé par la pompe à chaleur pour produire de l'eau chaude sanitaire, puis évacué vers l'extérieur en 9.

Il est à noter que le point collecteur 7 est indiqué à titre illustratif et n'est pas limitatif, toute autre configuration permettant de relier d'une part le chauffe-eau thermodynamique aérothermique 3 et d'autre part la ventilation mécanique contrôlée 4 et l'ensemble panneaux photovoltaïques 5 est envisagée dans le cadre de la présente invention.

Le ventilateur 3A du chauffe-eau thermodynamique aérothermique 3 est, dans le mode de réalisation représenté sur la Figure 1, utilisé comme système de ventilation de la ventilation mécanique contrôlée 4 et comme moteur de ventilation de l'arrière de l'ensemble panneaux photovoltaïques 5. Il est évident que l'on pourrait également envisager d'avoir des systèmes de ventilation distincts pour ces trois systèmes, sans s'écarter pour autant du cadre de la présente invention. Cette configuration permet cependant des économies par utilisation d'un unique ventilateur 3A déjà présent dans le chauffe-eau thermodynamique aérothermique 3 et pouvant fournir des débits d'air compatibles avec la ventilation mécanique contrôlée 4 et la ventilation de l'arrière de l'ensemble panneaux photovoltaïques 5 et permet d'éliminer toute consommation parasite provenant de l'ajout d'un ventilateur auxiliaire.

Un clapet 10 commandable permet de fermer l'arrivée d'air de l'ensemble panneaux photovoltaïques 5 vers le chauffe-eau thermodynamique aérothermique 3 lorsque l'air à l'arrière de l'ensemble panneaux photovoltaïques 5 n'est pas suffisamment chaud ou lorsque l'air admis dans le chauffe-eau thermodynamique aérothermique est à une température en dehors d'une plage de température admissible, la plage de température admissible étant par exemple de 5°C à 35°C.

Le clapet 10 est commandable soit en fonction d'une température mesurée par une sonde (non représentée) à l'arrière de l'ensemble panneaux photovoltaïques 5, soit par un programmateur, dans lequel les heures ou les périodes de production d'électricité de l'ensemble panneaux photovoltaïques 5 ont été préprogrammées, soit par l'optimisation de la température de l'air entrant dans le chauffe-eau thermodynamique aérothermique, cette valeur de température optimale étant définie par la matrice de performance de la pompe à chaleur aérothermique.

## Revendications

1. Bâtiment (1) équipé d'un système (2) de production d'eau chaude sanitaire, ledit système (2) comprenant :
un dispositif (3) à pompe à chaleur aérothermique produisant de l'eau chaude sanitaire à partir d'un flux d'air et d'une alimentation en eau froide ;
une ventilation mécanique contrôlée (4), comprenant un réseau de conduites d'air (6) dans le bâtiment (1) et un système de ventilation (3A) pour faire circuler de l'air dans le réseau de conduites d'air (6) dans le bâtiment (1) et entre l'intérieur et l'extérieur du bâtiment (1), le réseau de conduites d'air (6) étant couplé au dispositif (3) à pompe à chaleur aérothermique, le dispositif (3) à pompe à chaleur aérothermique étant configuré pour utiliser l'air mis en circulation par la ventilation mécanique contrôlée (4) pour produire de l'eau chaude sanitaire ;un ensemble panneaux photovoltaïques (5), sur ou à proximité du bâtiment (1), collectant la lumière émise par le soleil ;
au moins une conduite d'air (6) du réseau de conduites d'air (6) de la ventilation mécanique contrôlée (4) débouchant sur l'arrière de l'ensemble panneaux photovoltaïques (5) et étant reliée au dispositif (3) à pompe à chaleur aérothermique pour utiliser l'air chauffé par le soleil à l'arrière de l'ensemble panneaux photovoltaïques (5) pour produire de l'eau chaude sanitaire, par l'intermédiaire du système de ventilation (3A) ;
**caractérisé par le fait que** le réseau de conduites d'air (6) de la ventilation mécanique contrôlée (4) relie en outre une ou plusieurs des pièces (8) du bâtiment (1) et le dispositif à pompe à chaleur aérothermique (3) pour utiliser l'air provenant de la ou des pièces (8) du bâtiment (1) pour produire de l'eau chaude sanitaire.

2. Bâtiment (1) selon la revendication 1, **caractérisé par le fait que** la au moins une conduite d'air (6) entre l'arrière de l'ensemble panneaux photovoltaïques (5) et le dispositif à pompe à chaleur aérothermique (3) est munie d'un clapet (10) dont l'ouverture et la fermeture sont configurées pour être commandées par un dispositif de commande.

3. Bâtiment (1) selon la revendication 2, **caractérisé par le fait que** le dispositif de commande est configuré pour commander l'ouverture et la fermeture du clapet (10) soit en fonction d'horaires et/ou de jours préprogrammés, soit en fonction d'une température moyenne d'air optimisée entrant dans la pompe à chaleur, ladite température moyenne d'air optimisée étant définie par le point optimal de fonctionnement de la matrice de performance de ladite pompe à chaleur.

4. Bâtiment (1) selon la revendication 2, **caractérisé par le fait qu'**il comprend en outre une sonde de température à l'arrière de l'ensemble panneaux photovoltaïques (5), le dispositif de commande étant configuré pour commander l'ouverture et la fermeture du clapet (10) en fonction de la température mesurée par la sonde.

5. Bâtiment (1) selon la revendication 4, **caractérisé par le fait que** le dispositif de commande est configuré pour commander l'ouverture et la fermeture du clapet (10) pour contrôler la température de l'air admis dans le dispositif à pompe à chaleur aérothermique (3).

6. Bâtiment (1) selon l'une des revendications 1 à 5, **caractérisé par le fait que** le dispositif à pompe à chaleur aérothermique est un chauffe-eau thermodynamique aérothermique (3), l'énergie produite par le chauffe-eau thermodynamique aérothermique (3) étant utilisée pour produire de l'eau chaude sanitaire.

7. Bâtiment (1) selon la revendication 6, **caractérisé par le fait que** le système de ventilation de la ventilation mécanique contrôlée (4) est le ventilateur (3A) du chauffe-eau thermodynamique aérothermique (3).

8. Procédé d'amélioration du rendement du système de production d'eau chaude sanitaire (2) d'un bâtiment (1) selon la revendication 4, ledit procédé comprenant l'opération consistant à ouvrir le clapet (10) lorsque la température est supérieure ou égale à une température seuil.

9. Procédé d'amélioration du rendement du système de production d'eau chaude sanitaire (2) d'un bâtiment (1) selon la revendication 8, **caractérisé par le fait que** la température seuil est de 25° C.

10. Procédé d'amélioration du rendement du système de production d'eau chaude sanitaire (2) d'un bâtiment (1) selon la revendication 5, ledit procédé consistant à faire fonctionner le chauffe-eau thermodynamique aérothermique (3) pour produire de l'eau chaude sanitaire lorsque l'ensemble panneaux photovoltaïques (5) produit de l'électricité.

## Patentansprüche

1. Gebäude (1) mit einem System (2) zur Warmwassererzeugung im Sanitärbereich, wobei das System (2) folgendes umfasst:
eine Vorrichtung (3) mit Luftwärmepumpe, die warmes Brauchwasser aus einem Luftstrom und einer Kaltwasserversorgung herstellt;
eine kontrollierte mechanische Ventilation (4), die ein Netz von Luftleitungen (6) in dem Gebäude (1) umfasst und ein Ventilationssystem (3A), um Luft in dem Netz von Luftleitungen (6) in dem Gebäude (1) zirkulieren zu lassen und zwischen dem Innern und dem Äußeren des Gebäudes (1), wobei das Netz von Luftleitungen (6) mit der Vorrichtung (3) mit Luftwärmepumpe gekoppelt ist, wobei die Vorrichtung (3) mit Luftwärmepumpe gestaltet ist, um die von der kontrollierten mechanischen Ventilation (4) in Umlauf gebrachte Luft zu nutzen, um warmes Brauchwasser herzustellen; wobei eine Einheit von Fotovoltaikmodulen (5), auf dem Gebäude oder in dessen Nähe (1), das Sonnenlicht sammelt;
mindestens eine Luftleitung (6) des Netzes von Luftleitungen (6) der kontrollierten mechanischen Ventilation (4), die an der Hinterseite der Einheit von Fotovoltaikmodulen (5) mündet und mit der Vorrichtung (3) mit Luftwärmepumpe verbunden ist, um die durch die Sonne erwärmte Luft an der Hinterseite der Einheit von Fotovoltaikmodulen (5) zu nutzen, um warmes Brauchwasser herzustellen, mittels des Ventilationssystems (3A);
**gekennzeichnet dadurch dass** das Netz von Luftleitungen (6) der kontrollierten mechanischen Ventilation (4) außerdem eines oder mehrere der Zimmer (8) des Gebäudes (1) und die Vorrichtung mit Luftwärmepumpe (3) verbindet, um die Luft zu nutzen, die aus dem oder den Zimmern (8) des Gebäudes (1) kommt, um warmes Brauchwasser herzustellen.

2. Gebäude (1) nach Anspruch 1, **gekennzeichnet dadurch, dass** die mindestens eine Luftleitung (6) zwischen der Hinterseite der Einheit von Fotovoltaikmodulen (5) und der Vorrichtung mit Luftwärmepumpe (3) mit einer Klappe (10) ausgestattet ist, deren Öffnung und Schließung von einer Steuervorrichtung gesteuert wird.

3. Gebäude (1) nach dem Anspruch 2, **gekennzeichnet dadurch dass** die Steuervorrichtung die Öffnung und Schließung der Klappe (10) entweder je nach vorprogrammierter Zeit und/oder Datum steuert oder je nach einer durchschnittlichen optimierten Lufttemperatur, die in die Wärmepumpe eintritt, wobei die durchschnittliche optimierte Lufttemperatur durch den optimalen Arbeitspunkt der Leistungsmatrix der Wärmepumpe definiert ist.

4. Gebäude (1) nach Anspruch 2, **gekennzeichnet dadurch, dass** es außerdem eine Temperatursonde an der Hinterseite der Einheit von Fotovoltaikmodulen umfasst (5), wobei die Steuervorrichtung gestaltet ist, um die Öffnung und Schließung der Klappe (10) je nach der von der Sonde gemessenen Temperatur zu steuern.

5. Gebäude (1) nach Anspruch 4, **gekennzeichnet dadurch, dass** die Steuervorrichtung gestaltet ist, um die Öffnung und Schließung der Klappe (10) zu steuern, um die Temperatur der in die Vorrichtung mit Luftwärmepumpe (3) eingelassenen Luft zu kontrollieren.

6. Gebäude (1) nach einem beliebigen der Ansprüche 1 bis 5, **gekennzeichnet dadurch, dass** die Vorrichtung mit Luftwärmepumpe eine Luft-Wasser-Wärmepumpe (3) ist, wobei die von der Luft-Wasser-Wärmepumpe (3) hergestellte Energie benutzt wird, um warmes Brauchwasser herzustellen.

7. Gebäude (1) nach Anspruch 6, **gekennzeichnet dadurch, dass** das Ventilationssystem der kontrollierten mechanischen Ventilation (4) der Ventilator (3A) der Luft-Wasser-Wärmepumpe (3) ist.

8. Verfahren zur Verbesserung der Leistung des Systems zur Warmwassererzeugung im Sanitärbereich (2) eines Gebäudes (1) nach Anspruch 4, wobei das Verfahren den Arbeitsgang umfasst, der darin besteht, die Klappe (10) zu öffnen, wenn die Temperatur höher oder gleich einer Schwellentemperatur ist.

9. Verfahren zur Verbesserung der Leistung des Systems zur Warmwassererzeugung im Sanitärbereich (2) eines Gebäudes (1) nach Anspruch 8, **gekennzeichnet dadurch, dass** die Schwellentemperatur 25° C ist.

10. Verfahren zur Verbesserung der Leistung des Systems zur Warmwassererzeugung im Sanitärbereich (2) eines Gebäudes (1) nach Anspruch 5, wobei das Verfahren darin besteht, die Luft-Wasser-Wärmepumpe (3) laufen zu lassen, um warmes Brauchwasser herzustellen, wenn die Einheit von Fotovoltaikmodulen (5) Elektrizität herstellt.

## Claims

1. A building (1) equipped with a system (2) for producing sanitary hot water, said system (2) comprising:
an aerothermal heat pump device (3) producing sanitary hot water from an airflow and a cold water supply;
a controlled mechanical ventilation (4), comprising a network of air conducts (6) within the building (1) and a ventilation system (3A) to have the air circulate in the network of air conducts (6) within the building (1) and between the interior and the exterior of the building (1), the network of air conducts (6) being coupled to the aerothermal heat pump device (3), the aerothermal heat pump device (3) being configured to use the air circulated by the controlled mechanical ventilation (4) to produce sanitary hot water; a photovoltaic panel assembly (5), on or near the building (1), collecting the light emitted from the sun;
at least one air conduct (6) of the network of air conducts (6) of the controlled mechanical ventilation (4) opening on the rear of the photovoltaic panel assembly (5) and being connected to the aerothermal heat pump device (3) to use the air heated by the sun at the rear of the photovoltaic panel assembly (5) to produce sanitary hot water, via the ventilation system (3A);
**characterized in that** the network of air conducts (6) of the controlled mechanical ventilation (4) further connects one or more rooms (8) of the building (1) and the aerothermal heat pump device (3) to use the air from the one or more rooms (8) of the building (1) to produce sanitary hot water.

2. The building (1) according to claim 1, **characterized in that** the at least one air conduct (6) between the rear of the photovoltaic panel assembly (5) and the aerothermal heat pump device (3) is provided with a valve (10) the opening and closure of which is configured to be controlled by a control device.

3. The building (1) according to claim 2, **characterized in that** the control device is configured to control the opening and closure of the valve (10) either according to preprogrammed times and/or days, or according to an optimized average air temperature entering the heat pump, said optimized average air temperature being set by the optimum operating point of the matrix of performance of said heat pump.

4. The building (1) according to claim 2, **characterized in that** it further has a temperature probe at the rear of the photovoltaic panel assembly (5), the control device being configured to control the opening and closure of the valve (10) according to the temperature measured by the probe.

5. The building (1) according to claim 4, **characterized in that** the control device is configured to control the opening and closure of the valve (10) to control the temperature of air intake in the aerothermal heat pump device (3) .

6. The building (1) according to one of claims 1 to 5, **characterized in that** the aerothermal heat pump device is an aerothermal thermodynamic boiler (3), the power generated by the aerothermal thermodynamic boiler (3) being used to produce sanitary hot water.

7. The building (1) according to claim 6, **characterized in that** the ventilation system of the controlled mechanical ventilation (4) is the fan (3A) of the aerothermal thermodynamic boiler (3).

8. A method for improving the yield of the sanitary hot water producing system (2) of a building (1) according to claim 4, said method comprising the operation consisting in opening the valve (10) when the temperature is higher or equal to a threshold temperature.

9. The method for improving the yield of the sanitary hot water producing system (2) of a building (1) according to claim 8, **characterized in that** the threshold temperature is 25°C.

10. The method for improving the yield of the sanitary hot water producing system (2) of a building (1) according to claim 5, said method comprising operating the aerothermal thermodynamic boiler (3) to produce sanitary hot water when the photovoltaic panel assembly (5) produces electricity.
